# EUROPEAN PATENT APPLICATION

(11) **EP 4 510 383 A2**
(43) Date of publication of application: **19.02.2025**
(21) Application number: 24223192.6
(22) Date of filing: 03.02.2021
(51) Int. Cl.: H01Q 1/40

(54) **RESIN COMPOSITION FOR MOLDING AND ELECTRONIC COMPONENT APPARATUS**

(30) Priority: 11.12.2020 JP 2020206030
(62) Divisional of application: 21901684.7
(71) Applicant: Resonac Corporation, Tokyo 105-7325 (JP)
(72) Inventor: YAMAURA, Masashi, Tokyo, 100-6606 (JP); ARATA, Michitoshi, Tokyo, 100-6606 (JP); NAKAYAMA, Ayumi, Tokyo, 100-6606 (JP); KONDO, Yusuke, Tokyo, 100-6606 (JP); NOGUCHI, Yuji, Tokyo, 100-6606 (JP)
(74) Representative: Becker, Eberhard

(57) **Abstract**

A resin composition for molding includes an epoxy resin, a curing agent including an active ester compound, and an inorganic filler containing at least one selected from the group consisting of calcium titanate particles and strontium titanate particles, in which a total content of the calcium titanate particles and the strontium titanate particles is 30% by volume or more and less than 60% by volume with respect to the entire inorganic filler.

## Description

### [Technical Field]

The present disclosure relates to a resin composition for molding and an electronic component apparatus.

### [Background Art]

In recent years, with the demand for highly functional, light, thin, short, and small electronic devices, high-density integration and high-density mounting of electronic components have progressed, and semiconductor packages used in these electronic devices are becoming smaller and smaller than ever before. Furthermore, the frequency of radio waves used for communication of electronic devices is also increasing.

From the viewpoints of dealing with the high frequency and the miniaturization of semiconductor packages, high dielectric constant epoxy resin compositions used for sealing semiconductor elements (for example, refer to Patent Literature 1 to 3) have been proposed.

### [Citation List]

### [Patent Literature]

[Patent Literature 1]
   Japanese Patent Laid-Open No. 2015-036410
[Patent Literature 2]
   Japanese Patent Laid-Open No. 2017-057268
[Patent Literature 3]
   Japanese Patent Laid-Open No. 2018-141052

### [Summary of Invention]

### [Technical Problem]

In recent years, along with the high functionality and the miniaturization of semiconductor packages (PKGs), development of antenna-in-packages (AiPs) which have an antenna function is in progress. Examples of materials for sealing an antenna include a resin composition for molding containing a curable resin, a curing agent, and an inorganic filler. By using a composition from which a cured product having a high dielectric constant can be obtained, it is possible to reduce the size of AiPs.

On the other hand, in general, a material having a high dielectric constant often has a high dielectric loss tangent. If a material having a high dielectric loss tangent is used, transmission signals are converted into heat due to transmission loss, and communication efficiency is likely to decrease. Here, the amount of transmission loss generated through heat conversion of radio waves transmitted from communication in a dielectric is expressed as the product of the frequency, the square root of a relative dielectric constant, and the dielectric loss tangent. That is, the transmission signal is likely to be converted into heat proportionally to the frequency. In particular, in AiPs, the frequency of radio waves used for communication is increased in order to cope with an increase in the number of channels due to diversification of information. For this reason, in the resin composition for molding, it is required for both a high dielectric constant and a low dielectric loss tangent to be achieved in a cured product after molding.

In addition, a material having a high dielectric constant sometimes reduces fluidity of a resin composition for molding. If the fluidity of a resin composition for molding is low, the moldability may deteriorate and poor appearance such as a flow pattern (hereinafter, also referred to as a "flow mark") may be caused on the surface of a cured product after molding. For this reason, favorable moldability is required in the resin composition for molding.

An objective of the present disclosure is to provide a resin composition for molding which has favorable moldability and in which both a high dielectric constant and a low dielectric loss tangent are achieved in a cured product after molding, and an electronic component apparatus using the same.

### [Solution to Problem]

Specific means for solving the objective includes the following aspects.
<1> A resin composition for molding including: an epoxy resin; a curing agent; and an inorganic filler containing at least one selected from the group consisting of calcium titanate particles and strontium titanate particles, in which a total content of the calcium titanate particles and the strontium titanate particles is 30% by volume or more and less than 60% by volume with respect to the entire inorganic filler.
<2> The resin composition for molding according to <1>, in which the curing agent includes an active ester compound.
<3> The resin composition for molding according to <1> or <2>, in which the inorganic filler further contains at least one selected from the group consisting of silica particles and alumina particles.
<4> The resin composition for molding according to <3>, in which the inorganic filler contains alumina particles.
<5> The resin composition for molding according to any one of <1> to <4>, in which a relative dielectric constant of the entire inorganic filler at 10 GHz is 80 or less.
<6> The resin composition for molding according to any one of <1> to <5>, in which a total content of the inorganic filler is 40% by volume to 85% by volume with respect to the entire resin composition for molding.
<7> The resin composition for molding according to any one of <1> to <6>, which is used in a high frequency device.
<8> The resin composition for molding according to any one of <1> to <7>, which is used in an antenna-in-package.
<9> An electronic component apparatus comprising: a support member; an electronic component placed on the support member; and a cured product of the resin composition for molding according to any one of <1> to <8> which seals the electronic component.
<10> The electronic component apparatus according to <9>, in which the electronic component includes an antenna.

### [Advantageous Effects of Invention]

According to the present disclosure, there is provided a resin composition for molding which has favorable moldability and in which both a high dielectric constant and a low dielectric loss tangent are achieved in a cured product after molding, and an electronic component apparatus using the same.

### [Description of Embodiments]

In the present disclosure, the term "step" also includes, in addition to a step independent of other steps, a step that cannot be clearly distinguished from other steps as long as the purpose of the step is achieved.

In the present disclosure, a numerical range indicated using "to" includes numerical values denoted before and after "to" as a minimum value and a maximum value.

In a numerical range denoted stepwise in the present disclosure, an upper limit value or a lower limit value denoted in one numerical range may be substituted with an upper limit value or a lower limit value of another stepwise numerical range denoted. In addition, in a numerical range denoted in the present disclosure, an upper limit value or a lower limit value of the numerical range may be substituted with values shown in examples.

Each component in the present disclosure may contain plural kinds of corresponding substances. In a case where plural kinds of substances corresponding to each component are present in a composition, the content of each component means a total content of the plural kinds of corresponding substances present in the composition unless otherwise specified.

In the present disclosure, there may be plural kinds of particles corresponding to components. In a case where plural kinds of particles corresponding to components are present in a composition, the particle diameter of each component means a value regarding a mixture of the plural kinds of corresponding particles present in the composition unless otherwise specified.

Hereinafter, aspects for implementing the present disclosure will be described in detail. However, the present disclosure is not limited to the following embodiments. Constituent elements (including an element step or the like) in the following embodiments are not essential unless otherwise specified. The same applies to numerical values and ranges thereof which do not limit the present disclosure.

### <Resin Composition for Molding>

A resin composition for molding according to one embodiment of the present disclosure includes: an epoxy resin; a curing agent; and an inorganic filler containing at least one (hereinafter, also referred to as a specific filler) selected from the group consisting of calcium titanate particles and strontium titanate particles, in which a total content of the calcium titanate particles and the strontium titanate particles is 30% by volume or more and less than 60% by volume with respect to the entire inorganic filler.

As described above, in the resin composition for molding, it is required for both a high dielectric constant and a low dielectric loss tangent to be achieved in a cured product after molding. For example, barium titanate can be considered as a material from which a high dielectric constant can be obtained. However, when barium titanate is used, not only the dielectric constant but also a dielectric loss tangent is likely to increase. On the other hand, if the above-described specific filler is used, it was found that it is possible to increase the dielectric constant and suppress increase in the dielectric loss tangent compared to the case where barium titanate is used. That is, in the present embodiment, it is thought that both a high dielectric constant and a low dielectric loss tangent can be achieved in a cured product after molding if a specific filler is contained.

In addition, moldability is required in the resin composition for molding as described above. However, if the resin composition for molding contains a large amount of specific fillers, in some cases, fluidity of the resin composition for molding is less likely to be obtained because the specific fillers have a non-spherical shape, and accordingly, favorable moldability of the resin composition for molding is less likely to be obtained.

On the other hand, in the present embodiment, the total content of specific fillers is 30% by volume or more and less than 60% by volume with respect to the entire inorganic filler. For this reason, it is thought that fluidity of the resin composition for molding is obtained and the moldability becomes favorable compared to the case where the total content of specific fillers is higher than the above-described range.

For the above-described reasons, it is assumed that the resin composition for molding of the present embodiment has favorably moldability and both a high dielectric constant and a low dielectric loss tangent can be achieved in a cured product after molding.

Hereinafter, each component constituting the resin composition for molding will be described. The resin composition for molding of the present embodiment may contain an epoxy resin, a curing agent, and an inorganic filler, and may contain other components as necessary.

### (Epoxy Resin)

The type of epoxy resin is not particularly limited as long as an epoxy resin has an epoxy group in a molecule.

Specific examples of epoxy resins include: novolac-type epoxy resins (such as a phenol novolac-type epoxy resin and an ortho-cresol novolac epoxy resin) which are obtained by epoxidizing novolac resins and condensing or co-condensing at least one phenolic compound selected from the group consisting of a phenol compound such as phenol, cresol, xylenol, resorcin, catechol, bisphenol A, or bisphenol F and a naphthol compound such as α-naphthol, β-naphthol, or dihydroxynaphthalene, and an aliphatic aldehyde compound such as formaldehyde, acetaldehyde, or propionaldehyde in the presence of an acidic catalyst; triphenylmethane-type epoxy resins which are obtained by epoxidizing triphenylmethane-type phenol resins and condensing or co-condensing the above-described phenolic compounds and an aromatic aldehyde compound such as benzaldehyde or salicylaldehyde in the presence of an acidic catalyst; copolymerization-type epoxy resins which are obtained by epoxidizing novolac resins and co-condensing the above-described phenol compounds and naphthol compounds, and an aldehyde compound in the presence of an acidic catalyst; diphenylmethane-type epoxy resins which are diglycidyl ethers of bisphenol A and bisphenol F; biphenyl-type epoxy resins which are diglycidyl ethers of alkyl-substituted or unsubstituted biphenyl; stilbene-type epoxy resins such as diglycidyl ethers of stilbene-based phenol compounds; sulfur atom-containing epoxy resins which are diglycidyl ethers of bisphenol S; epoxy resins which are glycidyl ethers of alcohols such as butanediol, polyethylene glycol, and polypropylene glycol; glycidyl ester-type epoxy resins which are glycidyl esters of polyhydric carboxylic acid compounds such as phthalic acid, isophthalic acid, and tetrahydrophthalic acid; glycidyl amine-type epoxy resins obtained by substituting active hydrogen bound to a nitrogen atom of aniline, diaminodiphenylmethane, isocyanuric acid, or the like with a glycidyl group; dicyclopentadiene-type epoxy resins obtained by epoxidizing a co-condensation resin of dicyclopentadiene and a phenol compound; alicyclic epoxy resins such as vinylcyclohexene diepoxide, 3,4-epoxycyclohexylmethyl-3,4-epoxycyclohexanecarboxylate, and 2-(3,4-epoxy)cyclohexyl-5,5-spiro(3,4-epoxy)cyclohexane-m-dioxane which are obtained by epoxidizing an olefin bond in a molecule; para-xylene-modified epoxy resins which are glycidyl ethers of para-xylene-modified phenol resins; meta-xylene-modified epoxy resins which are glycidyl ethers of meta-xylene-modified phenol resins; terpene-modified epoxy resins which are glycidyl ethers of terpene-modified phenol resins; dicyclopentadiene-modified epoxy resins which are glycidyl ethers of dicyclopentadiene-modified phenol resins; cyclopentadiene-modified epoxy resins which are glycidyl ethers of cyclopentadiene-modified phenol resins; polycyclic aromatic ring-modified epoxy resins which are glycidyl ethers of polycyclic aromatic ring-modified phenol resins; naphthalene-type epoxy resins which are glycidyl ethers of naphthalene-containing phenol resins; halogenated phenol novolac-type epoxy resins; hydroquinone-type epoxy resins; trimethylolpropane-type epoxy resins; linear aliphatic epoxy resins obtained by oxidizing an olefin bond with a peracid such as peracetic acid; and aralkyl-type epoxy resins obtained by epoxidizing aralkyl-type phenol resins such as a phenol aralkyl resin and a naphthol aralkyl resin. Furthermore, an epoxidized material or the like of an acrylic resin may also be exemplified as an epoxy resin. These epoxy resins may be used alone or in a combination of two or more thereof.

The epoxy equivalent (molecular weight/number of epoxy groups) of an epoxy resin is not particularly limited. From the viewpoints of balancing various characteristics such as moldability, reflow resistance, and electrical reliability, the epoxy equivalent of an epoxy resin is preferably 100 g/eq to 1,000 g/eq and more preferably 150 g/eq to 500 g/eq.

A value measured through a method according to JIS K 7236:2009 is used as an epoxy equivalent of an epoxy resin.

In a case where an epoxy resin is a solid, the softening point or the melting point of an epoxy resin is not particularly limited. The softening point or the melting point of an epoxy resin is preferably 40°C to 180°C from the viewpoints of moldability and reflow resistance and more preferably 50°C to 130°C from the viewpoint of handleability when preparing a resin composition for molding.

A value measured through differential scanning calorimetry (DSC) or a method (ring and ball method) according to JIS K 7234:1986 is used as a melting point or a softening point of an epoxy resin.

The mass proportion of an epoxy resin in the total amount of a resin composition for molding is, from the viewpoints of strength, fluidity, heat resistance, moldability, and the like, preferably 0.5 mass% to 30 mass%, more preferably 2 mass% to 20 mass%, and still more preferably 3.5 mass% to 13 mass%.

### (Curing Agent)

The resin composition for molding in the present embodiment contains a curing agent. The type of curing agent is not particularly limited.

A curing agent preferably includes an active ester compound. The active ester compound may be used alone or in a combination of two or more thereof. Here, the active ester compound refers to a compound which has one or more ester groups reacting with an epoxy group in one molecule and has an action of curing an epoxy resin. In a case where a curing agent includes an active ester compound, the curing agent may or may not include a curing agent in addition to the active ester compound.

If an active ester compound is used as a curing agent, the dielectric loss tangent of a cured product can be reduced to a low level compared to a case where a phenol curing agent or an amine curing agent is used as a curing agent. The reason is assumed as follows.

In a reaction between an epoxy resin and a phenol curing agent or an amine curing agent, a secondary hydroxyl group is produced. On the other hand, in a reaction between an epoxy resin and an active ester compound, an ester group is produced instead of a secondary hydroxyl group. Since an ester group has a lower polarity than a secondary hydroxyl group, a resin composition for molding containing an active ester compound as a curing agent can reduce the dielectric loss tangent of a cured product to a low level compared to a resin composition for molding containing only a curing agent that produces a secondary hydroxyl group as a curing agent.

In addition, since a polar group in a cured product enhances water absorbability of the cured product, the concentration of the polar group in the cured product can be reduced and the water absorbability of the cured product can be suppressed using an active ester compound as a curing agent. By suppressing the water absorbability of a cured product, that is, by suppressing the content of H₂O which is a polar molecule, the dielectric loss tangent of the cured product can be further reduced to a low level.

The type of active ester compound is not particularly limited as long as it is a compound having one or more ester groups reacting with an epoxy group in a molecule. Examples of active ester compounds include a phenol ester compound, a thiophenol ester compound, an N-hydroxyamine ester compound, and an esterified substance of a heterocyclic hydroxy compound.

Examples of active ester compounds include an ester compound obtained from at least one kind of an aliphatic carboxylic acid or an aromatic carboxylic acid and at least one kind of an aliphatic hydroxy compound or an aromatic hydroxy compound. Ester compounds which have aliphatic compounds as components of polycondensation and have aliphatic chains tend to have excellent compatibility with epoxy resins. Ester compounds which have aromatic compounds as components of polycondensation and have aromatic rings tend to have excellent heat resistance.

Specific examples of active ester compounds include aromatic esters obtained by a condensation reaction between aromatic carboxylic acids and phenolic hydroxyl groups. Among these, aromatic esters obtained by a condensation reaction between aromatic carboxylic acids and phenolic hydroxyl groups using a mixture of an aromatic carboxylic acid component in which 2 to 4 hydrogen atoms of aromatic rings such as benzene, naphthalene, biphenyl, diphenylpropane, diphenylmethane, diphenyl ethers, and diphenyl sulfonic acid are substituted with carboxy groups, a monovalent phenol in which one hydrogen atom of the aromatic ring is substituted with a hydroxyl group, and a polyhydric phenol in which 2 to 4 hydrogen atoms of the aromatic rings are substituted with hydroxyl groups as a raw material are preferable. That is, aromatic esters having a structural unit derived from the above-described aromatic carboxylic acid component, a structural unit derived from the above-described monovalent phenol, and a structural unit derived from the above-described polyhydric phenol are preferable.

Specific examples of active ester compounds include an active ester resin which is disclosed in Japanese Patent Laid-Open No. 2012-246367 and has a structure obtained by reacting a phenol resin having a molecular structure in which a phenol compound is knotted via an alicyclic hydrocarbon group, an aromatic dicarboxylic acid or a halide thereof, and an aromatic monohydroxy compound. Compounds represented by Structural Formula (1) below are preferable as the active ester resins.

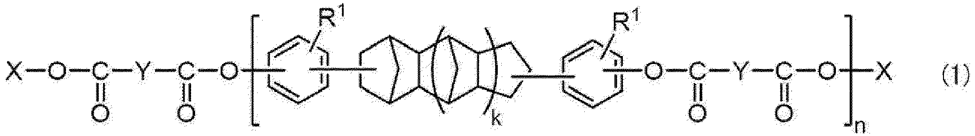

In Structural Formula (1), R¹ is an alkyl group having 1 to 4 carbon atoms, X is an unsubstituted benzene ring, an unsubstituted naphthalene ring, a benzene ring or a naphthalene ring substituted with an alkyl group having 1 to 4 carbon atoms, or a biphenyl group, Y is a benzene ring, a naphthalene ring, or a benzene ring or a naphthalene ring substituted with an alkyl group having 1 to 4 carbon atoms, k is 0 or 1, and n is 0.25 to 1.5 representing an average repeating number.

Specific examples of the compounds represented by Structural Formula (1) include exemplary compounds (1-1) to (1-10) below. t-Bu in the structural formulae is a tert-butyl group.

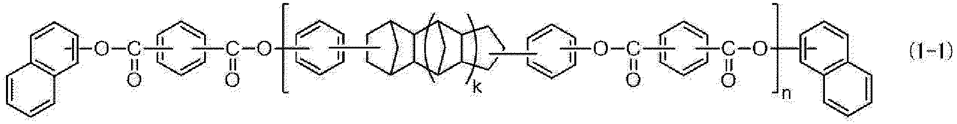

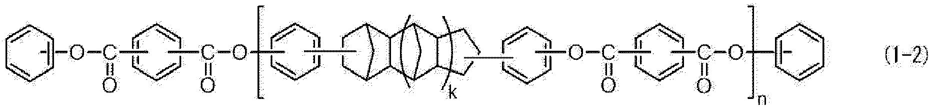

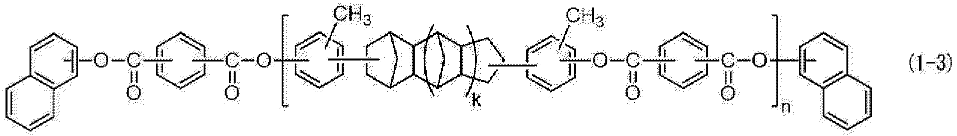

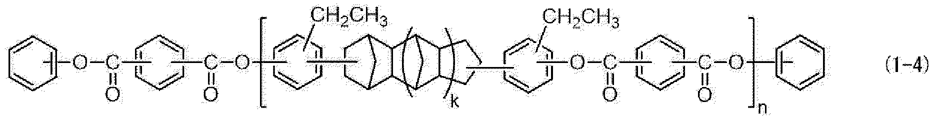

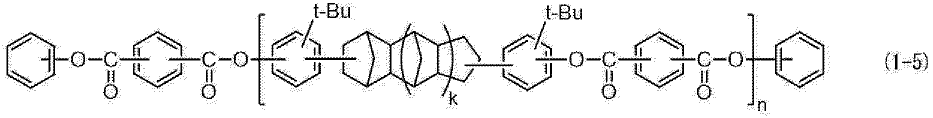

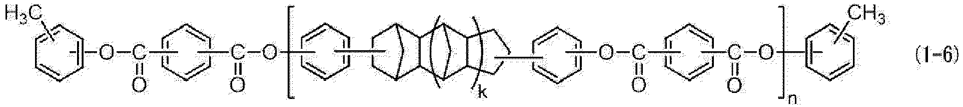

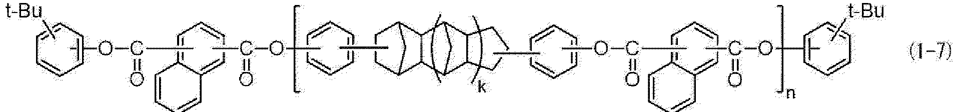

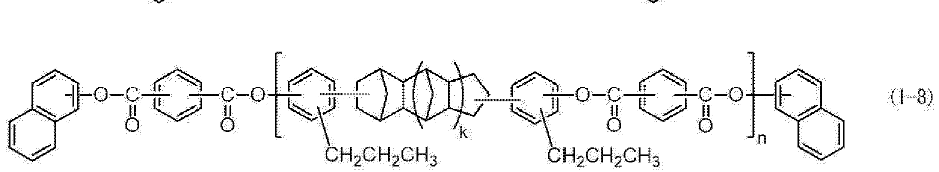

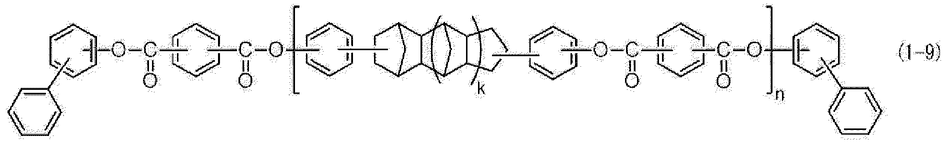

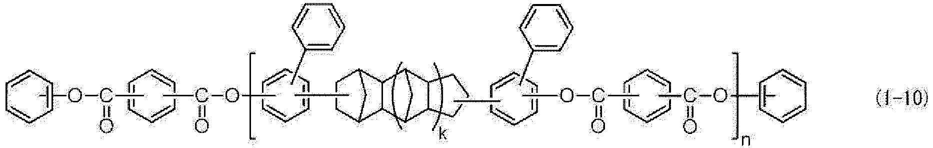

Specific examples of other active ester compounds include compounds represented by Structural Formula (2) below and compounds represented by Structural Formula (3) below which are disclosed in Japanese Patent Laid-Open No. 2014-114352.

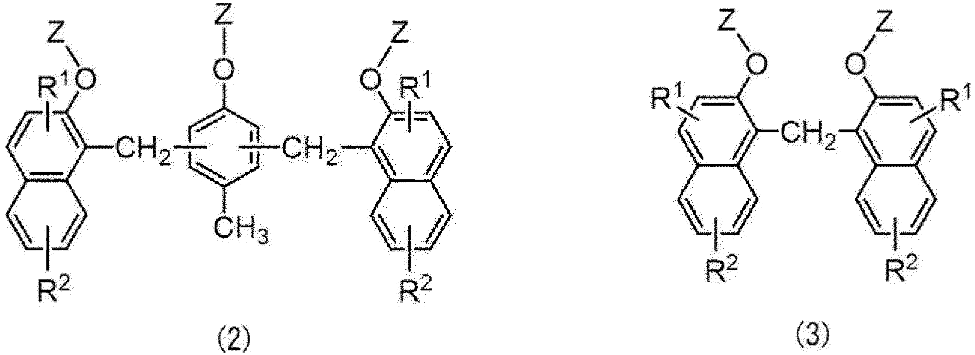

In Structural Formula (2), R¹ and R² each independently represent a hydrogen atom, an alkyl group having 1 to 4 carbon atoms, or an alkoxy group having 1 to 4 carbon atoms, and Z is an ester-forming structure moiety (z1) selected from the group consisting of an unsubstituted benzoyl group, an unsubstituted naphthoyl group, a benzoyl group or a naphthoyl group substituted with an alkyl group having 1 to 4 carbon atoms, and an acyl group having 2 to 6 carbon atoms, or a hydrogen atom (z2), in which at least one Z is the ester-forming structure moiety (z1).

In Structural Formula (3), R¹ and R² each independently represent a hydrogen atom, an alkyl group having 1 to 4 carbon atoms, or an alkoxy group having 1 to 4 carbon atoms, and Z is an ester-forming structure moiety (z1) selected from the group consisting of an unsubstituted benzoyl group, an unsubstituted naphthoyl group, a benzoyl group or a naphthoyl group substituted with an alkyl group having 1 to 4 carbon atoms, and an acyl group having 2 to 6 carbon atoms, or a hydrogen atom (z2), in which at least one Z is the ester-forming structure moiety (z1).

Specific examples of the compounds represented by Structural Formula (2) include exemplary compounds (2-1) to (2-6) below.

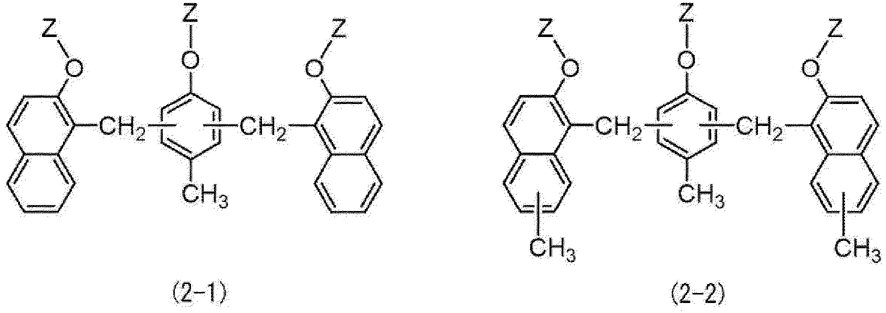

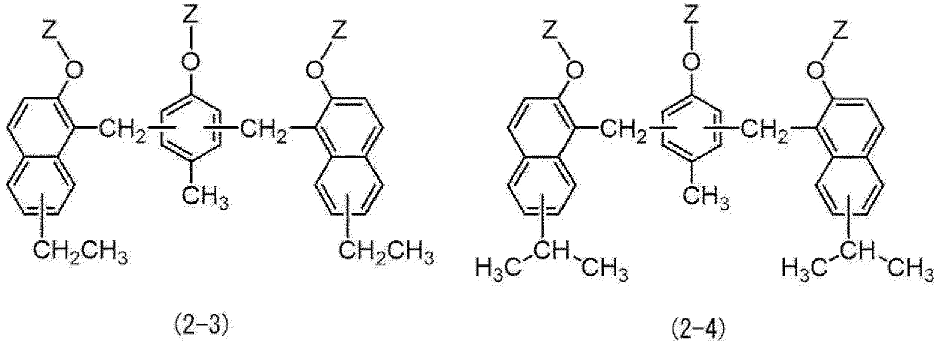

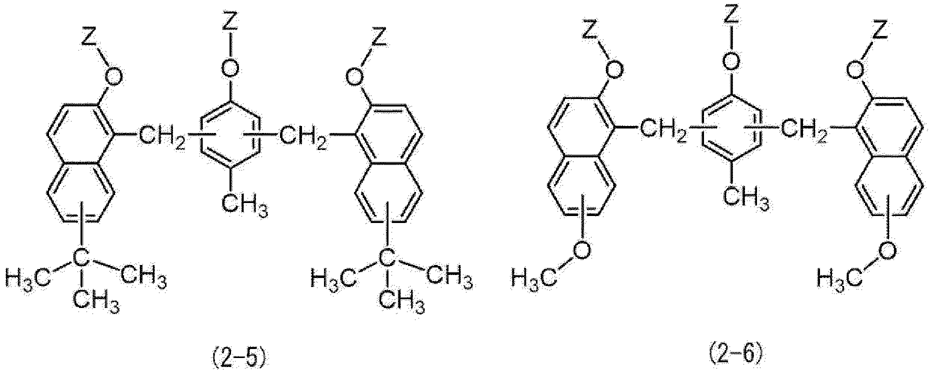

Specific examples of the compounds represented by Structural Formula (3) include exemplary compounds (3-1) to (3-6) below.

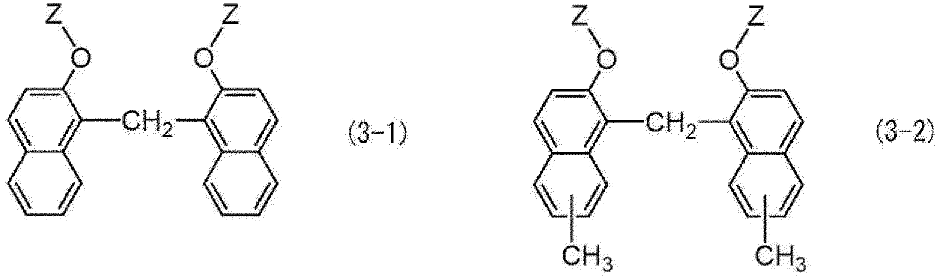

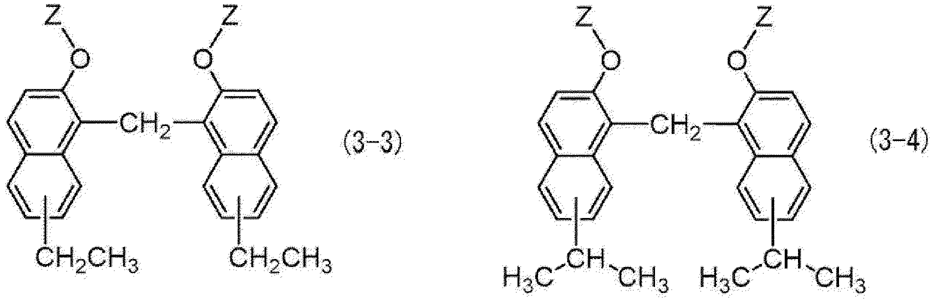

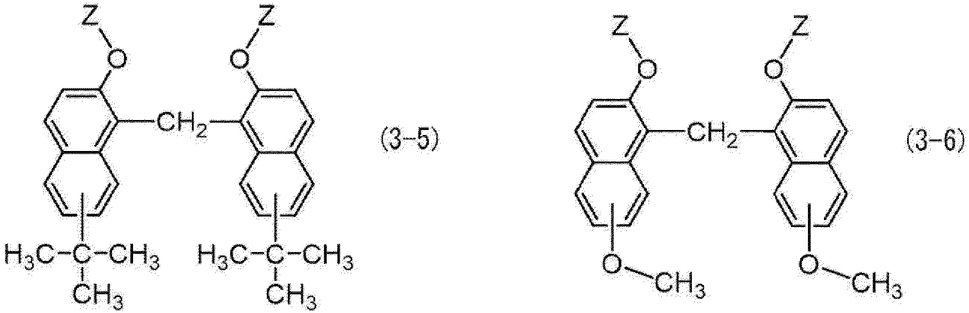

Commercially available products may be used as active ester compounds. Examples of commercially available products of active ester compounds include "EXB9451," "EXB9460," "EXB9460S," and "HPC-8000-65T" (manufactured by DIC CORPORATION) as active ester compounds having a dicyclopentadiene-type diphenol structure; "EXB9416-70BK," "EXB-8," and "EXB-9425" (manufactured by DIC CORPORATION) as active ester compounds having an aromatic structure; "DC808" (manufactured by Mitsubishi Chemical Corporation) as an active ester compound containing a phenol novolac acetylated product; and "YLH1026" (manufactured by Mitsubishi Chemical Corporation) as an active ester compound containing a benzoylated product of phenol novolac.

The ester equivalent (molecular weight/number of ester groups) of an active ester compound is not particularly limited. From the viewpoints of balancing various characteristics such as moldability, reflow resistance, and electrical reliability, the ester equivalent thereof is preferably 150 g/eq to 400 g/eq, more preferably 170 g/eq to 300 g/eq, and still more preferably 200 g/eq to 250 g/eq.

A value measured through a method according to JIS K 0070:1992 is used as an ester equivalent of an active ester compound.

The equivalent ratio (ester group/epoxy group) of an active ester compound to an epoxy resin is, from the viewpoint of reducing the dielectric loss tangent of a cured product to a low level, preferably 0.9 or more, more preferably 0.95 or more, and still more preferably 0.97 or more.

The equivalent ratio (ester group/epoxy group) of an active ester compound to an epoxy resin is, from the viewpoint of reducing the content of active ester compound unreacted, preferably 1.1 or less, more preferably 1.05 or less, and still more preferably 1.03 or less.

A curing agent may include other curing agents in addition to the active ester compound. The types of other curing agents are not particularly limited and can be selected according to desired properties of a resin composition for molding. Examples of other curing agents include a phenol curing agent, an amine curing agent, an acid anhydride curing agent, a polymercaptan curing agent, a polyaminoamide curing agent, isocyanate curing agent, and a blocked isocyanate curing agent.

Specific examples of phenol curing agents include polyhydric phenol compounds such as resorcin, catechol, bisphenol A, bisphenol F, and substituted or unsubstituted biphenol; novolac-type phenol resins obtained by condensing or co-condensing at least one phenolic compound selected from the group consisting of a phenol compound such as phenol, cresol, xylenol, resorcin, catechol, bisphenol A, bisphenol F, phenylphenol, or aminophenol and a naphthol compound such as α-naphthol, β-naphthol, or dihydroxynaphthalene, and an aldehyde compound such as formaldehyde, acetaldehyde, or propionaldehyde in the presence of an acidic catalyst; aralkyl-type phenol resins such as naphthol aralkyl resins and phenol aralkyl resins synthesized from dimethoxy para-xylene, bis(methoxymethyl)biphenyl, and the like and the above-described phenolic compounds; para-xylene-modified phenol resins and meta-xylene-modified phenol resins; melamine-modified phenol resins; terpene-modified phenol resins; dicyclopentadiene-type naphthol resins and dicyclopentadiene-type phenol resins synthesized through copolymerization of dicyclopentadiene and the above-described phenolic compounds; cyclopentadiene-modified phenol resins; polycyclic aromatic ring-modified phenol resins; biphenyl-type phenol resins; triphenylmethane-type phenol resins and condensing or co-condensing the above-described phenolic compounds and an aromatic aldehyde compound such as benzaldehyde or salicylaldehyde in the presence of an acidic catalyst; and phenol resins obtained through copolymerization of two or more of these. These phenol curing agents may be used alone or in a combination of two or more thereof.

The functional group equivalents (the hydroxyl equivalent in a case of a phenol curing agent) of other curing agents are not particularly limited. From the viewpoints of balancing various characteristics such as moldability, reflow resistance, and electrical reliability, the functional group equivalents of other curing agents are preferably 70 g/eq to 1,000 g/eq and more preferably 80 g/eq to 500 g/eq.

Values measured through a method according to JIS K0070:1992 are used as functional group equivalents (a hydroxyl equivalent in a case of a phenol curing agent) of other curing agents.

The softening point or the melting point of a curing agent is not particularly limited. The softening point or the melting point of a curing agent is preferably 40°C to 180°C from the viewpoints of moldability and reflow resistance and more preferably 50°C to 130°C from the viewpoint of handleability when producing a resin composition for molding.

A value measured in the same manner as the melting point or the softening point of an epoxy resin is used as a melting point or a softening point of a curing agent.

The equivalent ratio of an epoxy resin to a curing agent (all curing agents in a case where plural kinds of curing agents are used), that is, the ratio (number of functional groups in curing agent/number of functional groups in epoxy resin) of the number of functional groups in a curing agent to the number of functional groups in an epoxy resin, is not particularly limited. From the viewpoint of reducing unreacted contents, the ratio is preferably set in a range of 0.5 to 2.0 and more preferably set in a range of 0.6 to 1.3. From the viewpoints of moldability and reflow resistance, the ratio is more preferably set in a range of 0.8 to 1.2.

In a case where a curing agent includes an active ester compound and other curing agents, the mass proportion of the active ester compound in the total amount of the active ester compound and the other curing agents is, from the viewpoint of reducing the dielectric loss tangent of a cured product to a low level, preferably 80 mass% or more, more preferably 85 mass% or more, and still more preferably 90 mass% or more.

In a case where a curing agent includes an active ester compound and other curing agents, the total mass proportion of the active ester compound and an epoxy resin in the total amount of curing agents and the epoxy resin is, from the viewpoint of reducing the dielectric loss tangent of a cured product to a low level, preferably 80 mass% or more, more preferably 85 mass% or more, and still more preferably 90 mass% or more.

### (Curing Promoter)

The resin composition for molding in the present embodiment may contain a curing promoter as necessary. The type of curing promoter is not particularly limited and can be selected according to, for example, the type of epoxy resin or curing agent and desired properties of a resin composition for molding.

Examples of curing promoters include cyclic amidine compounds such as a diazabicycloalkene including 1,5-diazabicyclo[4.3.0]nonene-5 (DBN), and 1,8-diazabicyclo[5.4.0]undecene-7 (DBU), 2-methylimidazole, 2-phenylimidazole, 2-phenyl-4-methylimidazole, 2-ethyl-4-methylimidazole, and 2-heptadecylimidazole; derivatives of the cyclic amidine compounds; phenol novolac salts of the cyclic amidine compounds or derivatives thereof; compounds with intramolecular polarization obtained by adding a compound having a π bond, such as maleic anhydride, a quinone compound including 1,4-benzoquinone, 2,5-toluquinone, 1,4-naphthoquinone, 2,3-dimethylbenzoquinone, 2,6-dimethylbenzoquinone, 2,3-dimethoxy-5-methyl-1,4-benzoquinone, 2,3-dimethoxy-1,4-benzoquinone, and phenyl-1,4-benzoquinone, or diazophenylmethane to those compounds; cyclic amidinium compounds such as a tetraphenylborate salt of DBU, a tetraphenylborate salt of DBN, a tetraphenylborate salt of 2-ethyl-4-methylimidazole, and a tetraphenylborate salt of N-methylmorpholine; tertiary amine compounds such as pyridine, triethylamine, triethylenediamine, benzyldimethylamine, triethanolamine, dimethylaminoethanol, and tris(dimethylaminomethyl)phenol; derivatives of the tertiary amine compounds; ammonium salt compounds such as tetra-n-butylammonium acetate, tetra-n-butylammonium phosphate, tetraethylammonium acetate, tetra-n-hexylammonium benzoate, and tetrapropylammonium hydroxide; organic phosphines such as primary phosphines including ethylphosphine and phenylphosphine, secondary phosphines such as dimethylphosphine and diphenylphosphine, and tertiary phosphines such as triphenylphosphine, diphenyl(p-tolyl)phosphine, tris(alkylphenyl)phosphine, tris(alkoxyphenyl)phosphine, tris(alkyl-alkoxyphenyl)phosphine, tris(dialkylphenyl)phosphine, tris(trialkylphenyl)phosphine, tris(tetraalkylphenyl)phosphine, tris(dialkoxyphenyl)phosphine, tris(trialkoxyphenyl)phosphine, tris(tetraalkoxyphenyl)phosphine, trialkylphosphine, dialkylarylphosphine, alkyldiarylphosphine, trinaphthylphosphine, and tris(benzyl)phosphine; phosphine compounds such as a complex of the organic phosphines and organic borons; compounds with intramolecular polarization obtained by adding a compound having a π bond, such as maleic anhydride, a quinone compound including 1,4-benzoquinone, 2,5-toluquinone, 1,4-naphthoquinone, 2,3-dimethylbenzoquinone, 2,6-dimethylbenzoquinone, 2,3-dimethoxy-5-methyl-1,4-benzoquinone, 2,3-dimethoxy-1,4-benzoquinone, and phenyl-1,4-benzoquinone, or diazophenylmethane to the organic phosphines or the phosphine compounds; compounds with intramolecular polarization obtained by reacting the organic phosphines or the phosphine compounds with halogenated phenolic compounds such as 4-bromophenol, 3-bromophenol, 2-bromophenol, 4-chlorophenol, 3-chlorophenol, 2-chlorophenol, 4-iodophenol, 3-iodophenol, 2-iodophenol, 4-bromo-2-methylphenol, 4-bromo-3-methylphenol, 4-bromo-2,6-dimethylphenol, 4-bromo-3,5-dimethylphenol, 4-bromo-2,6-di-tert-butylphenol, 4-chloro-1-naphthol, 1-bromo-2-naphthol, 6-bromo-2-naphthol, and 4-bromo-4'-hydroxybiphenyl, and then performing a process of dehydrohalogenation; tetra-substituted phosphonium compounds such as tetra-substituted phosphonium including tetraphenylphosphonium, a tetraphenylborate salt of tetra-substituted phosphonium including tetraphenylphosphonium tetra-p-tolylborate, and salts of tetra-substituted phosphonium with a phenol compound; salts of tetraalkylphosphonium with partial hydrolysates of aromatic carboxylic acid anhydride; phosphobetaine compounds; and adducts of phosphonium compounds and silane compounds.

The curing promoters may be used alone or in a combination of two or more thereof.

Among these, examples of particularly suitable curing promoters include triphenylphosphine, adducts of triphenylphosphine and quinone compounds, adducts of tributylphosphine and quinone compounds, and adducts of tri-p-tolylphosphine.

In a case where the resin composition for molding contains a curing promoter, the amount of curing promoter is, based on 100 parts by mass of resin components (a total amount of an epoxy resin and a curing agent), preferably 0.1 parts by mass to 30 parts by mass and more preferably 1 part by mass to 15 parts by mass. If the amount of curing promoter is 0.1 parts by mass or more with respect to 100 parts by mass of resin components, curing tends to favorably occur in a short period of time. If the amount of curing promoter is 30 parts by mass or less with respect to 100 parts by mass of resin components, the curing rate is not too fast and favorable molded products tend to be obtained.

### (Inorganic Filler)

The resin composition for molding in the present embodiment contains an inorganic filler containing a specific filler (that is, at least one selected from the group consisting of calcium titanate particles and strontium titanate particles). Moreover, the total content of specific fillers is 30% by volume or more and less than 60% by volume with respect to an entire inorganic filler. That is, an inorganic filler includes a specific filler and other fillers in addition to the specific filler.

### -Specific Filler-

A specific filler may contain any one of calcium titanate particles or strontium titanate particles and may contain both calcium titanate particles and strontium titanate particles.

Among these, a specific filler preferably contains calcium titanate particles.

Calcium titanate particles and strontium titanate particles may be surface-treated.

The total content of specific fillers is 30% by volume or more and less than 60% by volume with respect to an entire inorganic filler. From the viewpoint of obtaining a cured product with a high dielectric constant, the total content of specific fillers is, based on an entire inorganic filler, preferably 35% by volume or more and more preferably 40% by volume or more. From the viewpoint of moldability, the total content of specific fillers is, based on an entire inorganic filler, preferably 55% by volume or less and more preferably 50% by volume or less. Moreover, from the viewpoint of achieving both favorable moldability and high dielectric constant, the total content of specific fillers is, based on an entire inorganic filler, preferably 35% by volume to 55% by volume and more preferably 40% by volume to 50% by volume.

The content (% by volume) of specific fillers in an entire inorganic filler can be obtained through the following method.

A thin sample of a cured product of a resin composition for molding is imaged with a scanning electron microscope (SEM). An arbitrary area S is specified in the SEM image, and a total area A of an inorganic filler contained in the area S is obtained. Next, elements of the inorganic filler are specified using an energy dispersive X-ray spectroscope (SEM-EDX) to obtain a total area B of specific fillers contained in the total area A of the inorganic filler. A value obtained by dividing the total area B of the specific fillers by the total area A of the inorganic filler is converted into a percentage (%), and this value is taken as a content (% by volume) of calcium titanate particles in the entire inorganic filler.

The area S is a sufficiently large area with respect to the size of the inorganic filler. For example, the area S is sized to contain 100 or more inorganic fillers. The area S may be the sum of a plurality of cut surfaces.

The total content of specific fillers is 15% by volume or more and less than 40% by volume with respect to an entire resin composition for molding. From the viewpoint of obtaining a cured product with a high dielectric constant, the total content of specific fillers is, based on an entire resin composition for molding, more preferably 25% by volume or more and still more preferably 27% by volume or more. From the viewpoint of moldability, the total content of specific fillers is, based on an entire resin composition for molding, more preferably 35% by volume or less and still more preferably 33% by volume or less. Moreover, from the viewpoint of achieving both favorable moldability and high dielectric constant, the total content of specific fillers is, based on an entire resin composition for molding, more preferably 25% by volume to 35% by volume and still more preferably 27% by volume to 33% by volume.

The volume average particle diameter of specific fillers is preferably 0.1 µm to 100 µm and more preferably 0.5 µm to 30 µm.

The volume average particle diameter of specific fillers can be measured as follows. A resin composition for molding is placed in a melting pot and allowed to stand at 800°C for 4 hours to be incinerated. The obtained ash can observed with SEM and separated according to the shape, a particle size distribution can be obtained from the observation image, and a volume average particle diameter of specific fillers can be obtained as a volume average particle diameter (D50) from the particle size distribution.

Specific fillers may be a mixture of two or more kinds of fillers having different volume average particle diameters.

The shapes of specific fillers are not particularly limited, and examples thereof include a spherical shape, an elliptical shape, and an amorphous shape. In addition, specific fillers may be crushed.

### -Other Fillers-

The types of other fillers are not particularly limited. Specific examples of materials for other fillers include inorganic materials such as fused silica, crystal silica, glass, alumina, calcium carbonate, zirconium silicate, calcium silicate, silicon nitride, aluminum nitride, boron nitride, beryllia, zirconia, zircon, forsterite, steatite, spinel, mullite, titania, talc, clay, and mica.

Inorganic fillers having a flame-retardant effect may be used as the other fillers. Examples of inorganic fillers having a flame-retardant effect include aluminum hydroxide, magnesium hydroxide, a composite metal hydroxide such as a composite hydroxide of zinc and magnesium, and zinc borate.

The other fillers may be used alone or in a combination of two or more thereof.

Among these, the other fillers preferably contain at least one selected from the group consisting of silica particles and alumina particles from the viewpoints that the filling rate can be improved with a spherical shape, the dielectric constant is lower than that of a specific inorganic filler, and the dielectric properties of a composite material can be controlled. The other fillers may contain only one of silica particles and alumina particles and contain both silica particles and alumina particles.

In a case where the other fillers contain at least one selected from the group consisting of silica particles and alumina particles, the total content of the silica particles and the alumina particles is, based on an entire inorganic filler, preferably 40% by volume to 70% by volume, more preferably 45% by volume to 65% by volume, and still more preferably 50% by volume to 60% by volume.

The other fillers preferably contain alumina particles from the viewpoint of increasing fluidity of a resin composition for molding.

In a case where the other fillers contain alumina particles, the content of the alumina particles is, based on an entire inorganic filler, preferably 40% by volume to 70% by volume, more preferably 45% by volume to 65% by volume, and still more preferably 50% by volume to 60% by volume.

From the viewpoint of reducing the dielectric loss tangent of a cured product to a low level, the content of barium titanate based on an entire inorganic filler is preferably less than 10% by volume, more preferably less than 5% by volume, and still more preferably less than 1% by volume.

The volume average particle diameter of other fillers is not particularly limited. The volume average particle diameter of other fillers is preferably 0.2 µm to 100 µm and more preferably 0.5 µm to 50 µm. When the volume average particle diameter of other fillers is 0.2 µm or more, the increase in the viscosity of a resin composition for molding tends to be further suppressed. When the volume average particle diameter of other fillers is 100 µm or less, the filling properties of a resin composition for molding tend to be further improved.

The volume average particle diameter of other inorganic fillers can be measured as follows. A resin composition for molding is placed in a melting pot and allowed to stand at 800°C for 4 hours to be incinerated. The obtained ash can observed with SEM and separated according to the shape, a particle size distribution can be obtained from the observation image, and a volume average particle diameter of other fillers can be obtained as a volume average particle diameter (D50) from the particle size distribution.

Other fillers may be a mixture of two or more kinds of fillers having different volume average particle diameters.

The shapes of other fillers are not particularly limited, and examples thereof include a spherical shape, an elliptical shape, and an amorphous shape. In addition, other fillers may be crushed.

Other fillers preferably have a spherical shape from the viewpoint of improving fluidity of a resin composition for molding.

### -Total Content and Characteristics of Inorganic fillers-

The total content of inorganic fillers contained in a resin composition for molding is, from the viewpoint of controlling strength and fluidity of a cured product of the resin composition for molding, preferably 40% by volume to 90% by volume of the entire resin composition for molding, more preferably 40% by volume to 85% by volume thereof, still more preferably 45% by volume to 85% by volume thereof, particularly preferably 50% by volume to 82% by volume thereof, and significantly preferably 55% by volume to 80% by volume.

The content (% by volume) of inorganic fillers in a resin composition for molding can be obtained through the following method.

A thin sample of a cured product of a resin composition for molding is imaged with a scanning electron microscope (SEM). An arbitrary area S is specified in the SEM image, and a total area A of inorganic fillers contained in the area S is obtained. A value obtained by dividing the total area A of the inorganic fillers by the area S is converted into a percentage (%), and this value is taken as a content (% by volume) of the inorganic fillers in the resin composition for molding.

The area S is a sufficiently large area with respect to the size of the inorganic fillers. For example, the area S is sized to contain 100 or more inorganic fillers. The area S may be the sum of a plurality of cut surfaces.

The inorganic fillers may cause a bias in the abundance ratio in the gravity direction during curing of the resin composition for molding. In that case, when an image is taken with SEM, the entire gravity direction of the cured product is imaged, and the area S including the entire gravity direction of the cured product is specified.

The range of the relative dielectric constant (hereinafter, also referred to as a "dielectric constant") of an entire inorganic filler at 10 GHz is, for example, 80 or less.

Examples of methods of setting the total content of specific fillers to 30% by volume or more and less than 60% by volume with respect to the entire inorganic filler and setting the dielectric constant of the entire inorganic filler to 80 or less include a method of using non-calcined specific fillers as specific fillers. Here, the non-calcined specific fillers refer to specific fillers that have not been exposed to a temperature of 1000°C or higher after being synthesized.

The dielectric constant of specific fillers is greatly increased through calcining at a temperature of 1000°C or higher. For example, the dielectric constant after non-calcined calcium titanate is calcined at a temperature of 1000°C for 2 hours is 10 times or more of the dielectric constant of calcium titanate before calcination.

For this reason, in a case where the dielectric constant of the entire inorganic filler is adjusted to 80 or less while using calcined specific fillers as specific fillers, the total content of the specific fillers in the entire inorganic filler is lowered. Moreover, in a resin composition for molding in which an inorganic filler containing calcined specific fillers at a low content and having a dielectric constant in the total of the inorganic filler of 80 or less is used, although a cured product having a high dielectric constant can be obtained, unevenness in the dielectric constant in the cured product is likely to occur. On the other hand, in a resin composition for molding in which an inorganic filler containing non-calcined specific fillers at a content of 30% by volume or more and less than 60% by volume and having a dielectric constant in the total of the inorganic filler of 80 or less is used, a cured product having a high dielectric constant and high uniformity in the dielectric constant can be obtained.

The dielectric constant of the entire inorganic filler is, from the viewpoint of suppressing dielectric loss, preferably 50 or less, more preferably 40 or less, and still more preferably 30 or less. The dielectric constant of the entire inorganic filler is, from the viewpoint of miniaturization of electronic components such as an antenna, preferably 5 or more, more preferably 10 or more, and still more preferably 15 or more. The dielectric constant of the entire inorganic filler is, from the viewpoints of suppression of dielectric loss and miniaturization of electronic components such as an antenna, preferably 5 to 50, more preferably 10 to 40, and still more preferably 15 to 30.

Here, the dielectric constant of the entire inorganic filler is obtained, for example, as follows.

Specifically, three or more kinds of resin compositions for measurement which contain inorganic fillers to be measured and a specific curable resin and have different contents of the inorganic fillers and a resin composition for measurement contains the specific curable resin but no inorganic filler are prepared. Examples of the resin compositions for measurement which contain inorganic fillers to be measured and a specific curable resin include resin compositions for measurement containing a biphenyl aralkyl-type epoxy resin, a phenol curing agent which is a phenol aralkyl-type phenol resin, a curing promoter containing organic phosphine, and inorganic fillers to be measured. In addition, examples of three or more resin compositions for measurement having different contents of inorganic fillers include resin compositions for measurement having contents of inorganic fillers of 10% by volume, 20% by volume, and 30% by volume with respect to the entire resin compositions for measurement.

Each of the resin compositions for measurement prepared are molded through compression molding under the conditions of a mold temperature of 175°C, a molding pressure of 6.9 MPa, and a curing time of 600 seconds to obtain respective cured products for measurement. The relative dielectric constant of each of the cured products for measurement obtained at 10 GHz is measured, and a graph is created in which the contents of inorganic fillers are plotted on the lateral axis and the measurement values of the relative dielectric constants are plotted on the longitudinal axis. From the obtained graph, linear approximation is performed through a least-squares method, and the relative dielectric constant when the contents of inorganic fillers are 100% by volume is obtained through extrapolation and used as "dielectric constants of the entire inorganic filler."

### [Various Additives]

The resin composition for molding in the present embodiment may contain, in addition to the above-described components, various kinds of additives such as a coupling agent, an ion exchanger, a releasing agent, a flame retardant, a coloring agent, and a stress relaxation agent exemplified below. The resin composition for molding in the present embodiment may contain various kinds of additives well known in the technical field as necessary in addition to additives exemplified below.

### (Coupling Agent)

The resin composition for molding in the present embodiment may contain a coupling agent. From the viewpoint of enhancing adhesiveness between resin components and inorganic fillers, the resin composition for molding preferably contains a coupling agent. Examples of coupling agents include well-known coupling agents such as silane compounds including epoxysilane, mercaptosilane, aminosilane, alkylsilane, ureidosilane, vinylsilane, and disilazane, titanium compounds, aluminum chelate compounds, and aluminum-zirconium compounds.

In a case where the resin composition for molding contains a coupling agent, the amount of coupling agent is, based on 100 parts by mass of inorganic fillers, preferably 0.05 parts by mass to 5 parts by mass and more preferably 0.1 parts by mass to 2.5 parts by mass. If the amount of coupling agent is 0.05 parts by mass or more with respect to 100 parts by mass of inorganic fillers, the adhesiveness with a frame tends to be further improved. If the amount of coupling agent is 5 parts by mass or less with respect to 100 parts by mass of inorganic fillers, the moldability of a package tends to be further improved.

### (Ion Exchanger)

The resin composition for molding in the present embodiment may contain an ion exchanger. The resin composition for molding preferably contains an ion exchanger from the viewpoint of improving high-temperature shelf properties and moisture resistance of an electronic component apparatus including electronic components to be sealed. The ion exchanger is not particularly limited, and well-known ones in the related art can be used. Examples thereof include hydrotalcite compounds and hydrous oxides of at least one selected from the group consisting of magnesium, aluminum, titanium, zirconium, and bismuth. The ion exchangers may be used alone or in a combination of two or more thereof. Among these, hydrotalcite represented by General Formula (A) below is preferable.

Mg_{(1-X)}AL_{X}(OH)₂(CO₃)_{X/2}·mH₂O ...... (A)

(0<X≤0.5, m is a positive number)

In a case where the resin composition for molding contains an ion exchanger, the content thereof is not particularly limited as long as it is an amount sufficient to capture ions such as halogen ions. For example, the content of an ion exchanger is, based on 100 parts by mass of resin components (a total amount of an epoxy resin and a curing agent), preferably 0.1 parts by mass to 30 parts by mass and more preferably 1 part by mass to 10 parts by mass.

### (Releasing Agent)

The resin composition for molding in the present embodiment may contain a releasing agent from the viewpoint of obtaining favorable releasability from a mold during molding. The releasing agent is not particularly limited, and well-known ones in the related art can be used. Specific examples thereof include carnauba wax, higher fatty acids such as montanic acid and stearic acid, higher fatty acid metal salts, ester-based wax including montanic acid esters, and polyolefin-based wax including polyethylene oxides and non-oxidized polyethylene. The releasing agents may be used alone or in a combination of two or more thereof.

In a case where the resin composition for molding contains a releasing agent, the amount of releasing agent is, based on 100 parts by mass of resin components (a total amount of an epoxy resin and a curing agent), preferably 0.01 parts by mass to 10 parts by mass and more preferably 0.1 parts by mass to 5 parts by mass. If the amount of releasing agent is 0.01 parts by mass or more with respect to 100 parts by mass of resin components, the sufficient releasability tends to be obtained. If the amount of releasing agent is 10 parts by mass or less, more favorable adhesiveness tends to be obtained.

### (Flame Retardant)

The resin composition for molding in the present embodiment may contain a flame retardant. The flame retardant is not particularly limited, and well-known ones in the related art can be used. Specific examples thereof include organic or inorganic compounds containing halogen atoms, antimony atoms, nitrogen atoms, or phosphorus atoms, and metal hydroxides. The flame retardants may be used alone or in a combination of two or more thereof.

In a case where the resin composition for molding contains a flame retardant, the amount thereof is not particularly limited as long as it is an amount sufficient to obtain a desired flame-retardant effect. For example, the amount thereof is, based on 100 parts by mass of resin components (a total amount of an epoxy resin and a curing agent), preferably 1 part by mass to 30 parts by mass and more preferably 2 parts by mass to 20 parts by mass.

### (Coloring Agent)

The resin composition for molding in the present embodiment may contain a coloring agent. Examples of coloring agents include well-known coloring agents such as carbon black, organic dyes, organic pigments, titanium oxide, red lead, and red oxide. The content of a coloring agent can be appropriately selected depending on the purpose and the like. The coloring agents may be used alone or in a combination of two or more thereof.

### (Stress Relaxation Agent)

The resin composition for molding in the present embodiment may contain a stress relaxation agent. If the resin composition for molding contains a stress relaxation agent, warpage deformation of a package and generation of package cracks can be further reduced. Examples of stress relaxation agents include generally used well-known stress relaxation agents (flexible agents). Specific examples thereof include thermoplastic elastomers based on silicone, styrene, olefin, urethane, polyester, polyether, polyamides, polybutadiene, and the like; rubber particles such as natural rubber (NR), acrylonitrile-butadiene rubber (NBR), acrylic rubber, urethane rubber, and silicone powder; and rubber particles, such as a methyl methacrylate-styrene-butadiene copolymer (MBS), a methyl methacrylate-silicone copolymer, and a methyl methacrylate-butyl acrylate copolymer, having a core-shell structure. The stress relaxation agents may be used alone or in a combination of two or more thereof.

Among the stress relaxation agents, a silicone-based stress relaxation agent is preferable. Examples of silicone-based stress relaxation agents include one having an epoxy group, one having an amino group, and one obtained by modifying these with polyether, and a silicone compound having an epoxy group and a silicone compound such as a polyether-based silicone compound are more preferable.

In a case where the resin composition for molding contains a stress relaxation agent, the amount of stress relaxation agent is, based on 100 parts by mass of resin components (a total amount of an epoxy resin and a curing agent), for example, preferably 1 part by mass to 30 parts by mass and more preferably 2 parts by mass to 20 parts by mass.

### (Method for Preparing Resin Composition for Molding)

A method for preparing a resin composition for molding is not particularly limited. Examples of general methods include a method for sufficiently mixing predetermined formulation amounts of components with a mixer or the like, followed by melt-kneading the mixture with a mixing roll, an extruder, and the like, and cooling and pulverizing the mixture. More specific examples thereof include a method for stirring and mixing predetermined amounts of the above-described components, kneading the mixture with an extruder, a roll, a kneader, and the like preheated to 70°C to 140°C, and cooling and pulverizing the mixture.

The resin composition for molding in the present embodiment is preferably a solid at normal temperature and pressure (for example, at 25°C under atmospheric pressure). The shape of the resin composition for molding in a case where the resin composition for molding is a solid is not particularly limited, but examples thereof include a powdery shape, a granular shape, and a tablet shape. The resin composition for molding in a case where the resin composition for molding is a tablet shape preferably has dimensions and mass that suit molding conditions of a package from the viewpoint of handleability.

### (Characteristics of Resin Composition for Molding)

The relative dielectric constant of a cured product, obtained by molding the resin composition for molding in the present embodiment through compression molding under the conditions of a mold temperature of 175°C, a molding pressure of 6.9 MPa, a curing time of 600 seconds, at 10 GHz is, for example, 10 to 20. The relative dielectric constant of the cured product at 10 GHz is preferably 11 to 18 and more preferably 12 to 17 from the viewpoint of miniaturization of electronic components such as an antenna.

The above-described relative dielectric constant is measured using a dielectric constant measurement device (for example, Agilent Technologies, product name "Network Analyzer N5227A") at a temperature of 25±3°C.

The dielectric loss tangent of a cured product, obtained by molding the resin composition for molding in the present embodiment through compression molding under the conditions of a mold temperature of 175°C, a molding pressure of 6.9 MPa, a curing time of 600 seconds, at 10 GHz is, for example, 0.020 or less. The dielectric loss tangent of the cured product at 10 GHz is preferably 0.018 or less and more preferably 0.015 or less from the viewpoint of reducing transmission loss. The lower limit value of the dielectric loss tangent of the cured product at 10 GHz is not particularly limited, and is, for example, 0.005.

The above-described dielectric loss tangent is measured using a dielectric constant measurement device (for example, Agilent Technologies, product name "Network Analyzer N5227A") at a temperature of 25±3°C.

The flow distance (hereinafter, also referred to as "spiral flow") when a resin composition for molding is molded using a mold for measuring a spiral flow according to EMMI-1-66 under the conditions of a mold temperature of 175°C, a molding pressure of 6.9 MPa, and a curing time of 90 seconds is preferably 80 cm or more, more preferably 100 cm or more, and still more preferably 120 cm or more. The upper limit value of the spiral flow is not particularly limited, and is, for example, 200 cm.

The gel time of the resin composition for molding at 175°C is preferably 30 seconds to 90 seconds and more preferably 40 seconds to 60 seconds.

The gel time at 175°C is measured as follows. Specifically, the measurement of the gel time using Curelastometer of JSR Trading Co., Ltd. is performed on 3 g of a sample of the resin composition for molding at a temperature of 175°C, and the time until a torque curve rises is measured as gel time (sec).

### (Application of Resin Composition for Molding)

The resin composition for molding in the present embodiment can be applied to, for example, production of an electronic component apparatus to be described below, particularly to production of a high frequency device.

The resin composition for molding in the present embodiment is particularly suitable for an antenna-in-package (AiP) in a high frequency device in which an antenna placed on a support member is sealed with the resin composition for molding.

### <Electronic Component Apparatus>

An electronic component apparatus which is an embodiment of the present disclosure includes: a support member; an electronic component placed on the support member; and a cured product of the resin composition for molding which seals the electronic component.

Examples of electronic component apparatuses include ones (for example, a high frequency device) obtained by sealing an electronic component region obtained by mounting electronic components (such as active elements including semiconductor chips, transistors, diodes, thyristors, passive elements including capacitors, resistors, and coils, and antennas) on support members such as lead frames, wired tape carriers, wiring boards, glass, silicon wafers, organic substrates with a resin composition for molding.

The types of the above-described support members are not particularly limited, and generally used support members can be used for manufacturing an electronic component apparatus.

The above-described electronic components may contain an antenna or may contain an antenna and elements in addition to the antenna. The above-described antenna is not limited as long as it plays a role of an antenna, and may be an antenna element or may be wiring.

In addition, in the electronic component apparatus of the present embodiment, other electronic components may be arranged on the surface of the support member opposite to the surface on which the above-described electronic components are arranged as necessary. The other electronic components may be sealed with the resin composition for molding or with other resin compositions, or may not be sealed.

### (Method for Manufacturing Electronic Component Apparatus)

A method for manufacturing an electronic component apparatus according to the present embodiment includes a step of arranging electronic components on a support member and a step of sealing the electronic components with the resin composition for molding.

The method for carrying out the above-described each step is not particularly limited, and can be carried out through a general method. In addition, the types of support members and electronic components used for manufacturing an electronic component apparatus are not particularly limited, and support members and electronic components generally used for manufacturing an electronic component apparatus can be used.

Examples of methods for sealing electronic components using the resin composition for molding include a low-pressure transfer molding method, an injection molding method, and a compression molding method. Among these, a low-pressure transfer molding method is common.

### [Examples]

Hereinafter, the above-described embodiment will be described in detail using examples, but the scope of the above-described embodiment is not limited to these examples.

### <Preparation of Resin Composition for Molding>

The components shown below are mixed at the formulation ratios (parts by mass) shown in Tables 1 to 3 to prepare resin compositions for molding of examples and a comparative example. These resin compositions for molding are solids at normal temperature and pressure.

In the tables, blanks mean that the component is not contained.

In addition, the content ("total content (% by volume)" in the tables) of an inorganic filler with respect to an entire resin composition for molding, the total content ("specific content (% by volume)" in the tables) of specific fillers with respect to an entire resin composition for molding, the total content ("specific proportion (% by volume)" in the tables) of specific fillers with respect to the entire inorganic filler used, and the relative dielectric constant ("dielectric constant of entire filler" in the tables) of the entire inorganic filler at 10 GHz are also shown in the tables.
· Epoxy resin 1: Triphenylmethane-type epoxy resin, epoxy equivalent of 167 g/eq (Mitsubishi Chemical Corporation, product name "1032H60")
· Epoxy resin 2: Biphenyl-type epoxy resin, epoxy equivalent of 192 g/eq (Mitsubishi Chemical Corporation, product name "YX-4000")
· Epoxy resin 3: O-cresol novolac-type epoxy resin, epoxy equivalent of 200 g/eq ("N500P" manufactured by DIC CORPORATION)
· Epoxy resin 4: Biphenyl aralkyl-type epoxy resin, epoxy equivalent of 274 g/eq (Nippon Kayaku Co., Ltd., product name "NC-3000")

· Curing agent 1: Active ester compound, DIC CORPORATION, product name "EXB-8"
· Curing agent 2: Phenol curing agent, phenol aralkyl resin, hydroxyl equivalent of 205 g/eq (Meiwa Plastic Industries, Ltd., product name "MEH7851 series")

· Inorganic filler 1: Calcium titanate particles, non-calcined specific filler, volume average particle diameter of 4 µm, polyhedron shape
· Inorganic filler 2: Calcium titanate particles, non-calcined specific filler, volume average particle diameter of 0.2 µm, polyhedron shape
· Inorganic filler 3: Strontium titanate particles, non-calcined specific filler, volume average particle diameter of 5 µm, polyhedron shape
· Inorganic filler 4: Barium titanate particles, non-calcined other fillers, volume average particle diameter of 6.6 µm, spherical shape
· Inorganic filler 5: Alumina particles, other fillers, volume average particle diameter of 5.7 µm, spherical shape
· Inorganic filler 6: Alumina particles, other fillers, volume average particle diameter of 0.7 µm, spherical shape
· Inorganic filler 7: Silica particles, other fillers, volume average particle diameter of 31 µm, spherical shape
· Inorganic filler 8: Silica particles, other fillers, volume average particle diameter of 6.6 µm, spherical shape
· Inorganic filler 9: Silica particles, other fillers, volume average particle diameter of 0.5 µm, spherical shape

· Curing promoter: Triphenylphosphine/1,4-benzoquinone adduct
· Coupling agent: N-phenyl-3-aminopropyltrimethoxysilane (Shin-Etsu Chemical Co., Ltd., product name "KBM-573")
· Releasing agent: Montanic acid ester wax (Clariant Japan K.K., product name "HW-E") · Stress relaxation agent: Polyether-based silicone compound (Momentive Performance Materials, product name "SIM768E")
· Coloring agent: Carbon black (Mitsubishi Chemical Corporation, product name "MA600")

The volume average particle diameter of the above-described inorganic fillers is a value obtained through the following measurement.

Specifically, an inorganic filler is first added to a dispersion medium (water) in a range of 0.01 mass% to 0.1 mass%, and the mixture is dispersed in a bath-type ultrasonic cleaner for 5 minutes.

5 mL of the obtained dispersion was injected into a cell, and the particle size distribution was measured at 25°C using a laser diffraction-scattering type particle size distribution measurement device (HORIBA, Ltd., LA920).

The particle diameter at an integrated value of 50% in the obtained particle size distribution was set to a volume average particle diameter.

### <Evaluation of Resin Composition for Molding>

### (Relative Dielectric Constant and Dielectric Loss Tangent)

Each resin composition for molding was added to a vacuum hand press machine, molded under the conditions of a mold temperature of 175°C, a molding pressure of 6.9 MPa, and a curing time of 600 seconds, and post-cured at 175°C for 6 hours to obtain a plate-like cured product (a length of 12.5 mm, a width of 25 mm, and a thickness of 0.2 mm). This plate-like cured product was used as a test piece to measure a relative dielectric constant and a dielectric loss tangent at a temperature of 25±3°C and 10 GHz using a dielectric constant measurement device (Agilent Technologies, product name "Network Analyzer N5227A"). The results are shown in the tables (the "relative dielectric constant" and the "dielectric loss tangent" in the tables).

### (Fluidity: Spiral Flow)

Each resin composition for molding was molded using a mold for measuring a spiral flow according to EMMI-1-66 under the conditions of a mold temperature of 180°C, a molding pressure of 6.9 MPa, and a curing time of 120 seconds to obtain a flow distance (cm). The results are shown in the tables ("flow distance (cm)" in the tables).

### (Gel Time)

The measurement of the gel time using Curelastometer of JSR Trading Co., Ltd. was performed on 3 g of each resin composition for molding at a temperature of 175°C, and the time until a torque curve rose was regarded as gel time. The results are shown in the tables ("gel time (seconds)" in the tables).

### (Moldability)

The moldability was evaluated as follows.

Specifically, each resin composition for molding was molded using Apic Yamada Press (G-Line Press) under the conditions of 180°C, 6.9 MPa, and 90 s to produce a molded product having a thickness of 0.5 mm. A flow mark was visually observed on the obtained molded product. The evaluation criteria are as follows. The results are shown in the tables.
A: There is no flow mark that can be visually observed.
B: Flow marks where slight shading can be observed in an area less than one-third of a molded product from an air vent are generated.
C: Flow marks are generated in an area less than one-third of a molded product from an air vent.
D: Flow marks are generated in an area greater than or equal to one-third of a molded product from an air vent.

**[Table 1]**

| Item | | Example 1 | Example 2 | Example 3 | Example 4 | Example 5 | Example 6 | Example 7 |
|---|---|---|---|---|---|---|---|---|
| Composition | Epoxy resin 1 | 70.1 | 70.1 | 70.1 | 70.1 | | | 70.1 |
| | Epoxy resin 2 | 29.9 | 29.9 | 29.9 | 29.9 | 29.9 | 29.9 | 29.9 |
| | Epoxy resin 3 | | | | | 70.1 | | |
| | Epoxy resin 4 | | | | | | 70.1 | |
| | Curing agent 1 | 119.0 | 119.0 | 119.0 | 119.0 | 106.0 | 86.0 | 119.0 |
| | Curing agent 2 | | | | | | | |
| | Curing promoter | 4.3 | 4.0 | 4.3 | 4.3 | 4.0 | 4.0 | 4.0 |
| | Coupling agent | 8.0 | 8.0 | 8.0 | 8.0 | 8.0 | 8.0 | 8.0 |
| | Releasing agent | 1.0 | 1.0 | 1.0 | 1.0 | 1.0 | 1.0 | 1.0 |
| | Stress relaxation agent | 10.0 | 10.0 | 10.0 | 5.0 | 10.0 | 10.0 | 10.0 |
| | Coloring agent | | | | | | | |
| | Inorganic filler 1 | 510.0 | 551.0 | 793.0 | 599.0 | 523.0 | 478.0 | 630.0 |
| | Inorganic filler 2 | 128.0 | 158.0 | 199.0 | 251.0 | 150.0 | 137.0 | 158.0 |
| | Inorganic filler 3 | | | | | | | |
| | Inorganic filler 4 | | | | | | | |
| | Inorganic filler 5 | 608.0 | 827.0 | 946.0 | 1574.0 | 784.0 | 718.0 | |
| | Inorganic filler 6 | | | | | | | |
| | Inorganic filler 7 | | | | | | | |
| | Inorganic filler 8 | | | | | | | 435.0 |
| | Inorganic filler 9 | | | | | | | |
| | Total | 1488.3 | 1778 | 2180.3 | 2661.3 | 1686 | 1542 | 1465 |
| Filler | Total content (% by volume) | 60 | 65 | 70 | 75 | 65 | 65 | 65 |
| | Specific content (% by volume) | 30 | 29.25 | 35 | 25.5 | 29.25 | 29.25 | 32.5 |
| | Specific proportion (% by volume) | 50 | 45 | 50 | 34 | 45 | 45 | 50 |
| | Dielectric constant of entire filler | 20.5 | 18.8 | 20.5 | 15.2 | 18.8 | 18.8 | 18.3 |
| Evaluation | Relative dielectric constant | 15.4 | 15.3 | 17.6 | 14.7 | 15.0 | 14.8 | 15.1 |
| | Dielectric loss tangent | 0.007 | 0.006 | 0.007 | 0.006 | 0.006 | 0.006 | 0.006 |
| | Flow distance (cm) | 150 | 130 | 120 | 100 | 160 | 165 | >200 |
| | Gel time (seconds) | 53 | 58 | 62 | 70 | 55 | 60 | 75 |
| | Moldability | A | A | B | B | A | A | B |

**[Table 2]**

| Item | | Example 8 | Example 9 | Example 10 | Example 11 | Example 12 | Example 13 | Example 14 |
|---|---|---|---|---|---|---|---|---|
| Composition | Epoxy resin 1 | 70.1 | 70.1 | 70.1 | | 70.1 | 70.1 | 70.1 |
| | Epoxy resin 2 | 29.9 | 29.9 | 29.9 | 25.0 | 29.9 | 29.9 | 29.9 |
| | Epoxy resin 3 | | | | | | | |
| | Epoxy resin 4 | | | | 75.0 | | | |
| | Curing agent 1 | 119.0 | 119.0 | 119.0 | | 119.0 | 119.0 | 119.0 |
| | Curing agent 2 | | | | 80.3 | | | |
| | Curing promoter | 4.0 | 4.0 | 3.0 | 3.5 | 4.0 | 4.0 | 4.3 |
| | Coupling agent | 8.0 | 8.0 | 8.0 | 8.0 | 8.0 | 8.0 | 8.0 |
| | Releasing agent | 1.0 | 1.0 | 1.0 | 1.0 | 1.0 | 1.0 | 1.0 |
| | Stress relaxation agent | 10.0 | 10.0 | 10.0 | 10.0 | | 10.0 | 10.0 |
| | Coloring agent | | | | | | | 6.6 |
| | Inorganic filler 1 | 551.0 | 551.0 | 630.0 | 465.0 | 530.0 | | 648.0 |
| | Inorganic filler 2 | 158.0 | 158.0 | 158.0 | 200.0 | 152.0 | | 163.0 |
| | Inorganic filler 3 | | | | | | 902.0 | |
| | Inorganic filler 4 | | | | | | | |
| | Inorganic filler 5 | 752.0 | 752.0 | | 635.0 | 794.0 | 547.0 | 648.0 |
| | Inorganic filler 6 | | 75.0 | | | | | |
| | Inorganic filler 7 | | | 435.0 | | | | |
| | Inorganic filler 8 | | | | | | | |
| | Inorganic filler 9 | 44.0 | | | | | | |
| | Total | 1747 | 1778 | 1464 | 1531.5 | 1708 | 1691 | 1707.9 |
| Filler | Total content (% by volume) | 65 | 65 | 65 | 65 | 65 | 60 | 65 |
| | Specific content (% by volume) | 29.25 | 32.5 | 32.5 | 32.5 | 29.25 | 33 | 29.25 |
| | Specific proportion (% by volume) | 45 | 50 | 50 | 50 | 45 | 55 | 45 |
| | Dielectric constant of entire filler | 18.6 | 18.8 | 18.3 | 18.6 | 18.8 | 23.3 | 18.8 |
| Evaluation | Relative dielectric constant | 15.2 | 15.4 | 15.0 | 15.0 | 15.3 | 15.9 | 16.0 |
| | Dielectric loss tangent | 0.006 | 0.007 | 0.006 | 0.020 | 0.006 | 0.007 | 0.009 |
| | Flow distance (cm) | 130 | 130 | >200 | 180 | 140 | 140 | 130 |
| | Gel time (seconds) | 55 | 60 | 75 | 50 | 55 | 53 | 59 |
| | Moldability | A | A | B | B | B | B | A |

**[Table 3]**

| Item | | Example 15 | Example 16 | Example 17 | Comparative Example 1 |
|---|---|---|---|---|---|
| Composition | Epoxy resin 1 | 70.1 | 70.1 | 70.1 | 70.1 |
| | Epoxy resin 2 | 29.9 | 29.9 | 29.9 | 29.9 |
| | Epoxy resin 3 | | | | |
| | Epoxy resin 4 | | | | |
| | Curing agent 1 | 119.0 | 119.0 | 119.0 | 119.0 |
| | Curing agent 2 | | | | |
| | Curing promoter | 4.3 | 4.3 | 4.0 | 4.0 |
| | Coupling agent | 8.0 | 8.0 | 8.0 | 8.0 |
| | Releasing agent | 1.0 | 1.0 | 1.0 | 1.0 |
| | Stress relaxation agent | 10.0 | 10.0 | 10.0 | 10.0 |
| | Coloring agent | | | | |
| | Inorganic filler 1 | 255.0 | 1019.0 | | |
| | Inorganic filler 2 | 128.0 | 256.0 | | |
| | Inorganic filler 3 | | | 1021.0 | |
| | Inorganic filler 4 | | | | 1492.0 |
| | Inorganic filler 5 | 852.0 | 1216.0 | 1134.0 | |
| | Inorganic filler 6 | | | | 900.0 |
| | Inorganic filler 7 | | | | |
| | Inorganic filler 8 | | | | |
| | Inorganic filler 9 | | | | |
| | Total | 1477.3 | 2733.3 | 2397 | 2634 |
| Filler | Total content (% by volume) | 60 | 75 | 70 | 70 |
| | Specific content (% by volume) | 18 | 37.5 | 39 | 0 |
| | Specific proportion (% by volume) | 30 | 50 | 56 | 0 |
| | Dielectric constant of entire filler | 13.9 | 20.6 | 21.9 | 26.9 |
| Evaluation | Relative dielectric constant | 11.6 | 18.6 | 19.8 | 14.0 |
| | Dielectric loss tangent | 0.006 | 0.007 | 0.0072 | 0.040 |
| | Flow distance (cm) | 140 | 100 | 80 | 180 |
| | Gel time (seconds) | 53 | 65 | 60 | 60 |
| | Moldability | A | C | C | D |

As shown in the tables, the resin compositions for molding of the examples have a long flow distance and favorable moldability compared to the resin composition for molding of the comparative example, and both a high relative dielectric constant and a low dielectric loss tangent in a cured product after molding are achieved.

The disclosure of Japanese Patent Application No. 2020-206030 filed December 11, 2020 is incorporated in the present specification as a whole by reference.

All of the references, the patent application, and the technical standard described in the present specification are incorporated in the present specification by reference to the same extent as in a case where incorporation of individual documents, patent application, and technical standard by reference is specifically and individually written.

## Claims

1. A resin composition for molding comprising:
an epoxy resin;
a curing agent, including an active ester compound; and
an inorganic filler containing at least one selected from the group consisting of calcium titanate particles and strontium titanate particles,
wherein a total content of the calcium titanate particles and the strontium titanate particles is 30% by volume or more and less than 60% by volume with respect to the entire inorganic filler.

2. The resin composition for molding according to claim 1,
wherein the inorganic filler further contains at least one selected from the group consisting of silica particles and alumina particles.

3. The resin composition for molding according to claim 1 or 2,
wherein a total content of the inorganic filler is 40% by volume to 85% by volume with respect to the entire resin composition for molding.

4. The resin composition for molding according to any one of claims 1 to 3, which is suitable for a high frequency device.

5. The resin composition for molding according to any one of claims 1 to 4,
wherein the inorganic filler contains alumina particles.

6. The resin composition for molding according to any one of claims 1 to 5,
wherein a relative dielectric constant of the entire inorganic filler at 10 GHz is 80 or less.

7. The resin composition for molding according to any one of claims 1 to 6, which is suitable for an antenna-in-package.

8. An electronic component apparatus comprising:
a support member;
an electronic component placed on the support member; and
a cured product of the resin composition for molding according to any one of claims 1 to 7 which seals the electronic component.

9. The electronic component apparatus according to claim 8,
wherein the electronic component includes an antenna.
